**Europäisches Patentamt**

**European Patent Office**

**Office européen des brevets**

(19)

(11) Veröffentlichungsnummer: **0 003 026**
**B1**

(12) # EUROPÄISCHE PATENTSCHRIFT

(45) Veröffentlichungstag der Patentschrift: **25.08.82**

(51) Int. Cl.³: **F 16 D 65/32**

(21) Anmeldenummer: **78101610.0**

(22) Anmeldetag: **08.12.78**

(54) Schnellösevorrichtung für Federspeicherbremszylinder mit Dämpfungseinrichtung.

(30) Priorität: **05.01.78 DE 2800449**

(43) Veröffentlichungstag der Anmeldung:
**25.07.79 Patentblatt 79/15**

(45) Bekanntmachung des Hinweises auf die Patenterteilung:
**25.08.82 Patentblatt 82/34**

(84) Benannte Vertragsstaaten:
**CH FR GB IT SE**

(56) Entgegenhaltungen:
**DE - A - 1 605 279**
**DE - A - 2 205 549**
**DE - A - 2 542 122**
**GB - A - 1 458 581**

(73) Patentinhaber: **Knorr-Bremse GmbH**
**Moosacher Strasse 80**
**D-8000 München 40 (DE)**

(72) Erfinder: **Kerscher, Albert**
**Frühlingstrasse 39**
**D-8057 Eching (DE)**
Erfinder: **Furtner, Walter**
**Briançonstrasse 4**
**D-8200 Rosenheim (DE)**

Schnellösevorrichtung für Federspeicherbremszylinder mit Dämpfungseinrichtung.

Die Erfindung bezieht sich auf eine Schnellösevorrichtung für Federspeicherbremszylinder entsprechend der im Oberbegriff des Hauptanspruches angegebenen Gattung.

Bei einer solchen, bekannten Vorrichtung (DE—A 2 205 549) geschieht das Lösen eines eingebremsten Federspeicherbremszylinders durch eine Druckmittelbeaufschlagung der der Speicherfeder abgewandten Seite des Federspeicherkolbens. Bei Mangel an ausreichendem Druckmitteldruck, beispielsweise bedingt durch irgendwelche Schäden im Druckmittelsystem, müssen am Federspeicherbremszylinder Vorrichtungen vorgesehen sein, welche mit einfachen Mitteln ein Lösen der Federspeicherbremse gestatten.

Der vielfältigen Ausführung solcher Lösevorrichtungen liegt stets das Entkoppeln des Kraftschlusses im Verlauf von Federn-Kolben-Kolbenstange — gegebenenfalls Gestängesteller -Kolbenstangenkopf zugrunde. Bekannt sind vor allem Lösungen, bei denen die Verbindung zwischen Kolben und Kolbenstange gelöst wird (z.B DE—A 2 205 549, DE—A 2 542 122 oder GB—A 1 458 581). Außerdem kann die Kolbenstange selbst zweiteilig, entkuppelbar ausgeführt sein. Bei einer derartigen bekannten Schnellösevorrichtung (DE—A 1 605 279) ist eine lösbare Drehkupplung zwischen einer ständig drehfest gehaltenen Bremsbetätigungsstange und einer Stellspindel einer selbsttätigen Spielnachstellvorrichtung eingeordnet. Die Stellspindel ist über ein nichtselbsthemmendes Gewinde mit Nachstellmuttern verschraubt, die ihrerseits vom Federspeicherkolben belastbar sind. Beim Lösen der Drehkupplung im durch den Federspeicherkolben bewirkten Bremszustand beginnt die ein nur geringes Trägheitsmoment aufweisende Stellspindel rasch zu rotieren und die Nachstellmuttern verschrauben sich auf ihr in Entspannungsrichtung der den Federspeicherkolben belastenden Speicherfeder.

Bei den meisten durch Entkuppeln des Kraftschlusses zum Lösen gebrachten Federspeicherbremszylindern wird einerseits durch noch wesentliche Mengen gespeicherter Energie der Federspeicherkolben bzw. andererseits durch die im Gestänge gespeicherte Energie die Kolbenstange plötzlich starken Beschleunigungskräften ausgesetzt, die auf die für solche Kräfte nicht zugeschnittenen Bauteile des Zylinders zerstörend wirken können.

Bei der eingangs genannten, bekannten Schnellösevorrichtung (DE—A 2 205 549) wird das Auftreten derart hoher Aufprallkräfte durch eine Dämpfungsvorrichtung vermieden, indem während des Schnellösevorgangs das im Beaufschlagungsraum des Speicherkolbens vorhandene Luftvolumen gedrosselt zur Atmosphäre entlassen wird. Hierdurch wird zwar beim Betätigen der Schnellösevorrichtung ein harter Aufprall des Federspeicherkolbens auf die Zylinderwandung durch Dämpfen der Bewegung des Federspeicherkolbens vermieden, das unter der Bremskraft elastisch verformte Bremsgestänge kann sich hierbei jedoch schlagartig entspannen und harte Aufprallstöße erfahren und verursachen.

Mit der älteren, nicht vorveröffentlichten europäischen Patentanmeldung EP—A 0 001 805 wurde ein Federspeicherbremszylinder vorgeschlagen, bei welchem der Federspeicherkolben über eine selbsttätig schaltende Drehkupplung im wesentlichen axial unverschieblich mit einer Gewindespindel verbunden ist, welche über ein nichtselbsthemmendes Gewinde mit einer Mutter verschraubt ist, die der ständig drehfest gehaltenen Kolbenstange zugehört. Zum Betätigen der Schnellöseeinrichtung ist an der Gehäuseabstützung der andererseits über die selbsttätige Drehkupplung auf die Gewindespindel einwirkenden Speicherfeder eine willkürlich schaltbare, weitere Drehkupplung vorgesehen. Beim Betätigen der Schnellösevorrichtung wird die Entspannungsenergie der Speicherfeder in Rotationsenergie der schweren und somit nur langsam beschleunigbaren Speicherfeder umgesetzt, so daß der Entspannungsvorgang der Speicherfeder langsam verläuft und harte Aufprallstöße zu Ende des Entspannungsvorganges vermieden werden. Die somit erreichte Dämpfung des Entspannungshubes ist jedoch nicht bei Federspeicherbremszylindern verwirklichbar, bei welchen der Federspeicherkolben mit der Kolbenstange über eine lösbare Kupplungsvorrichtung in Axialrichtung kuppelbar ist.

Die Aufgabe der Erfindung ist es daher, eine Schnellösevorrichtung für Federspeicherbremszylinder mit Dämpfung der eingangs genannten Gattung zu schaffen, welche mit einfachen Mitteln sicherstellt, daß bei ihrer Betätigung nicht nur, wie bekannt, die am Federspeicherkolben anstehende Federenergie, sondern auch die im Bremsgestänge gespeicherten Kräfte nicht schlagartig, sondern gedämpft freigegeben werden und welche somit harte Entspannungsstöße auch für das Bremsgestänge ausschließt.

Diese Aufgabe wird entsprechend den im Hauptanspruch angegebenen Merkmalen gelöst.

Vorteilhafte Weiterbildungen der Erfindung sind aus den Unteransprüchen ersichtlich.

Die Erfindung wird anhand der Zeichnung wie folgt im einzelnen näher erläutert.

Es zeigt:

Figur 1 einen Längsschnitt durch einen Federspeicherbremszylinder mit einer Schnellösevorrichtung,

Figur 2 ein weiteres Ausführungsbeispiel für einen Bremszylinder, der einen Gestängenachsteller aufweist, und

Figur 3 einen Schnitt entlang der Linie III—III

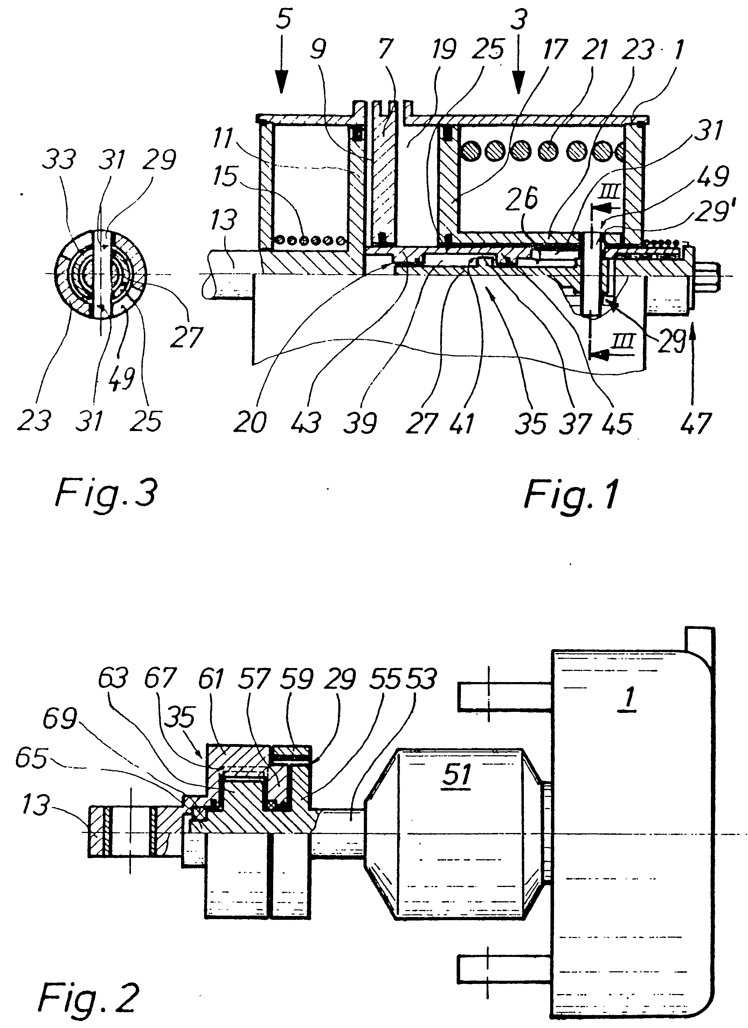

in Fig. 1.

Wie aus Fig. 1 ersichtlich, sind in einem gemeinsamen Bremszylindergehäuse 1 ein Federspeicherbremszylinder 3 und ein Betriebsbremszylinder 5 untergebracht, zwischen denen eine Gehäusetrennwand 7 liegt. Der Betriebsbremszylinder 5 besitzt einen Beaufschlagungsraum 9, welcher über den Betriebsbremskolben 11 entgegen der Kraft einer Rückholfeder 15 zum Verschieben der Kolbenstange mit nicht dargestellten Kolbenstangenkopf 13 im Sinne eines Bremsens dient. Im Federspeicherzylinder 3 wird ein Federspeicherkolben 17 vom Druck in einem Beaufschlagungsraum 19 entgegen der Kraft einer Speicherfeder 21 in seiner in Fig. 1. dargestellten Lösestellung gehalten. Ein mit dem Federspeicherkolben 17 fest verbundenes Kolbenrohr 23 umfaßt verschieblich eine eine Bohrung 26 aufweisende Kolbenstange 25, deren vorderes Ende die Gehäusetrennwand 7 luftdicht durchgreifend auf den Kolben 11 des Betriebsbremszylinders 5 wirkt. In der Bohrung 26 ist verschieblich ein Führungsteil untergebracht, wobei die beiden genannten Teile an ihrem dem Federspeicherkolben 17 abgewandten Ende von einem einer Kupplungsvorrichtung 29 zugehörenden Koppelglied 29' durchgriffen werden, so daß Kolbenrohr 23 und Führungsteil 27 keine Relativverschiebung zueinander ausführen können.

Das Koppelglied 29' durchgreift mit seinem mittleren Abschnitt das dem Federspeicherkolben 17 abgewandte Ende eines in der Kolbenstange 25 in axialer Richtung ausgebildeten Langloches 31.

In der in Fig. 1 dargestellten Lösestellung aller Teile befindet sich, wie in Fig. 3 dargestellt, in der radialen Ebene seitlich des Koppelgliedes 29' ein kurzer, quer zur Längsachse verlaufender Querschlitz 33 in der Kolbenstange 25; der Querschlitz 33 bildet zusammen mit dem Langloch 31 einen L-förmigen, ebenfalls der Kupplungsvorrichtung 29 zugehörenden Schlitz.

In den dem Federspeicherkolben 17 zugekehrten Bereichen der Bohrung 26 der Kolbenstange 25 und des Führungsteiles 27 ist eine Dämpfungseinrichtung 35 ausgebildet.

Diese besteht aus einem auf dem Führungsteil 27 ausgebildeten Verdrängungskörper 37, welcher zu der äußeren, zylindrischen Begrenzungswand eines in der Bohrung 26 der Kolbenstange 25 ausgebildeten, ringförmigen Raumes 39 ein durch einen Spalt 41 bewirktes, radiales Spiel aufweist.

Die Begrenzung des ringförmigen Raumes 29 erfolgt durch zwei im Abstand voneinander in der Bohrung 26 der Kolbenstange 25 unverschieblich ausgebildete, den Führungsteil 27 abgedichtet umfassende Ringkolben 43 und 45.

Der Raum 39 ist mit einem Fluid, z.B. Hydraulik gefüllt. Über eine hier nicht näher beschriebene, von außen zu handhabende Entriegelungsvorrichtung 47 ist das das Koppelglied 29' in einer Bohrung festhaltende Führungsteil 27 gegenüber der Kolbenstange 25 und gegenüber dem Kolbenrohr 23 drehbar, wobei die beiden radial außenliegenden Enden des Koppelgliedes 29' in dem bereits erwähnten Querschlitz 33 der Kolbenstange 25 und in einem Querschlitz 49 im Ende des Kolbenrohres 23 schwenkbar sind.

Die Wirkungsweise der Schnellösevorrichtung ist wie folgt:

Bei einer Betriebsbremsung wird der Druckbeaufschlagungsraum 9 mit Bremsdruck gefüllt, worauf der Betriebsbremskolben 11 entgegen der Kraft der Feder 15 die Kolbenstange mit Kolbenstangenkopf 13 im Sinne einer Bremsung nach links verschiebt. In der in Fig. 1 gezeigten Lösestellung des Federspeicherbremszylinders 3 ist dessen Federspeicherkolben 17 durch die im Beaufschlagungsraum 19 wirkende Druckluft entgegen der Kraft der Speicherfeder 21 nach rechts verschoben.

Wird zum Beispiel für ein abgestelltes Fahrzeug eine Feststellbremsung gewünscht, so wird der Druckbeaufschlagungsraum 19 entlüftet, worauf die Speicherfeder 21 den Federspeicherkolben 17, das Kolbenrohr 23, über das im Querschlitz 33 der Kolbenstange 25 stehende Koppelglied 29' die Kolbenstange 25 und ebenfalls über das Koppelglied 29' das Führungsteil 27 gemeinsam nach links verschiebt. Die die Gehäusetrennwand 7 luftdicht durchgreifende Kolbenstange 25 drückt mit ihrem Ende auf den Betriebsbremskolben 11 und damit eine Bremsung bewirkend auf die Kolbenstange mit Kolbenstangenkopf 13.

Der normale Lösevorgang des Federspeicherbremszylinders 3 erfolgt in der bekannten, üblichen Weise durch Druckluftbeaufschlagung des Beaufschlagungsraumes 19, worauf entgegen der Kraft der Speicherfeder 21 die Teile 17, 23, 29', 25 und 27 nacht rechts verschoben werden und der Bremszylinderkolben 11 infolge der wirksam werdenden Rückholfeder 15 in seine ein Lösen der Bremse bewirkende Ausgangsstellung zurückkehrt.

Besteht infolge eines Schadens in der Druckluftversorgung der Bremseinrichtung keine Möglichkeit, den Beaufschlagungsraum 19 eines in Bremsstellung befindlichen Federspeicherbremszylinders mit Druckluft zu beaufschlagen, und damit die Federspeicherbremse zu lösen, gestattet die in bekannter Weise vorgenommene Entriegelung des Koppelgliedes 29' die Wirkung der Speicherfeder 21 auf den Betriebsbremskolben 11 zu unterbinden.

Bei Betätigung der Entriegelungsvorrichtung 47 zum Lösen der Kupplungsvorrichtung 29 und der damit verbundenen, Drehung des das Koppelglied 29' haltenden Führungsteiles 27 schwenken die Enden des Koppelgliedes 29' in den Querschlitzen 33 und 49 in eine Stellung, in welcher das Langloch 31 mit dem Koppelglied 29' axial zu fluchten kommt.

Tritt dieses axiale Fluchten des Koppelgliedes 29' mit dem Langloch 31 der Kolbenstange 25 ein, so käme es ohne die erfindungsgemäße Dämpfungseinrichtung 35 unter der noch in der Speicherfeder 21 befindlichen Kraft und unter den entgegengesetzt wirkenden Rückstellkräften des Bremsgestänges und der Rückholfeder 15 zu einem plötzlichen und kräftigen Ineinanderschieben von Kolbenstange 25 und Kolbenrohr 23, das erst dann ruckartig beendet wird, wenn die linke Begrenzungsfläche des Langloches 31 das Koppelglied 29 erreicht hat.

Dieser zu Zerstörungen führende, plötzliche Anschlag der unter großer Kraft ineinander verschobenen Teile wird durch die erfindungsgemäße Ausbildung der Schnellösevorrichtung mit einer Dämpfungsvorrichtung 35 unterbunden. Das Ineinanderschieben von Kolbenstange 25 und Kolbenrohr 23 wird durch die erfindungsgemäße, stoßdämpferartige Dämpfungseinrichtung 35 zeitlich gestreckt. Der Verdrängungskörper 37 auf dem Führungsteil 27, welches über das Koppelglied 29' mit dem Kolbenrohr 23 verbunden ist, findet bei seiner Relativverschiebung durch den mit Fluid gefüllten Raum 39 nach links beträchtlichen Widerstand vor. Bei der Verschiebung des Verdrängungskörpers 37 muß die links von diesem befindliche Fluidmenge durch den radial gelegenen, geringen Spalt 41 in den rechts vom Verdrängungskörper 37 entstehenden Raum gepreßt werden. Durch die Größe des Querschnittes des Spaltes 41 oder gegebenenfalls durch den Verdrängungskörper 37 durchgreifende, kleine Drosselbohrungen kann der gedämpfte Ablauf der Verschiebung des Führungsteiles 27 gebenüber der Kolbenstange 25 beeinflußt werden. Nach Beendigung des zeitlich gedämpften Verschiebens der Kolbenstange 25 gegenüber dem Führungsteil 27 ist der Betriebsbremskolben frei von der Kraft der Speicherfeder 21 und kann in seine in Fig. 1 dargestellte Lösestellung zurückkehren.

Bei einem weiteren Ausführungsbeispiel, welches in Fig. 2 gezeigt ist, ist die Schnellösevorrichtung mit einer Dämpfungseinrichtung in Form einer Verdrängerpumpe ausgerüstet, welche gegebenenfalls gegen eine gedrosselte Entlastung fördert.

Der schematische Aufbau dieses weiteren Ausführungsbeispiels ist aus der Fig. 2 ersichtlich, und zwar wirkt die aus dem Bremszylinder 1 ragende Kolbenstange über die Spindel einer Nachstelleinrichtung 51 auf ein Betätigungsglied 53. Im Bremszustand des Bremszylinders 1 steht die in einer arretierbaren, nichtselbsthemmendes Gewinde tragenden Kupplungsmutter geführte Gewindespindel und damit das Betätigungsglied 53 unter einer eine Drehung zu bewirken suchenden Kraft.

Zwischen dem Betätigungsglied 53 und dem undrehbar gehaltenen Kolbenstangenkopf 13 ist die Kupplungsvorrichtung 29, mit der Dämpfungsvorrichtung zu einer Baueinheit zusammengefaßt, angeordnet. Die Kupplungsvorrichtung 29 weist hier eine erste Kupplungsscheibe 55 auf, die mit dem Betätigungsglied 53 verbunden ist. Fluchtend und mit gleichem Durchmesser zur ersten Kupplungsscheibe 55 liegt eine zweite Kupplungsscheibe 57. Beide an sich zueinander drehbaren Kupplungsscheiben 55 und 57 werden von einem Kupplungsband 59 an ihrem Umfang umfaßt, so daß bei Zuspannen des Kupplungsbandes 59 beide Kupplungsscheiben miteinander in Eingriff stehen.

Die zweite Kupplungsscheibe 57 ist Bestandteil eines Pumpenkammergehäuses 61 der eine Verdrängerpumpe aufweisenden Dämpfungseinrichtung 35. Die Verdrängerpumpe der Dämpfungseinrichtung 35 besteht aus einem großen Pumpenzahnrad 63, welches über eine Wellenabschnitt 65 mit der Kupplungsscheibe 55 und damit mit dem Betätigungsglied 53 verbunden ist. Die Zahnung des Pumpenrades 63 kämmt mit einem in einer radialaußen vom großen Pumpenrad 63 ausbebildeten Ausnehmung angeordneten Zahnritzel 67. Die Dämpfungseinrichtung 35 überbrückt also die aus den Kupplungsscheiben 55 und 57 sowie dem Kupplungsband 59 gebildete Drehkupplung.

Durch das Pumpenzahnrad 63 und das Zahnritzel 67 wird die Pumpenkammer in zwei Pumpenkammerabschnitte unterteilt, welche mit Fluid bestimmter Viskosität gefüllt und so ausgebildet sind, daß der Drehung des Pumpenzahnrades 63 ein merklicher Widerstand in gewünschter Höhe entgegenwirkt; zweckmäßig werden hierzu die beiden Pumpenkammerabschnitte durch gedrosselte Umgehungskanäle miteinander verbunden.

Die Vorrichtung zur Halterung und Betätigung des Kupplungsbandes 59 ist an dem undrehbaren Pumpengahäuse 61 abgestützt.

Zur Kraftübertragung zwischen dem drehbaren Betätigungsglied 53 und dem undrehbar gehaltenen Kolbenstangenkopf 13 dient ein Drucklager 69, welches in einer Ausnehmung des Verdrängerpumpengehäuses 61 eingesetzt ist.

Die Wirkungsweise des zweiten Ausführungsbeispiels der Schnellösevorrichtung, wie sie in Fig. 2 dargestellt ist, wird im folgenden beschrieben:

Sowohl bei Betriebsbremsungen wie bei Feststellbremsungen mittels des Federspeicherbremszylinders ist die erste Kupplungsscheibe 55 mit der zweiten Kupplungsscheibe 57 durch das zugespannte Kupplungsband 59 im Eingriff. Der undrehbare Kolbenstangenkopf 13 hält daher auch über das Betätigungsglied 53 die mit diesem verbundene Spindel der Nachstellvorrichtung (nicht im einzelnen dargestellt) undrehbar.

Auf weitere Einzelheiten des Vorganges einer Not-bzw. Schnellösung im Zusammenhang mit einer Gestängenachstelleinrichtung, wie sie im übrigen in der nicht vorveröffentlichten DE—A 27 02 874 dargestellt ist, wird an dieser Stelle verzichtet, da der eigentliche erfinderische Gedanke in einer Dämpfungseinrichtung bei Einleitung einer Schnellösung des in Drehung geratenen Betätigungsgliedes 53 liegt.

Ist die Schnellösung eines in Bremstellung befindlichen Federspeicherbremszylinders erforderlich, so wird die Zuspannkraft des Kupplungsbandes 59 gelöst und somit der Eingriff der zweiten Kupplungsscheibe 57 mit der ersten Kupplungsscheibe 55 aufgehoben. Die jetzt auftretende starke Drehung der Kupplungsscheibe 55 gegenüber der zweiten Kupplungsscheibe 57 ist eine Folge des Hineinschraubens der Spindel in die Kupplungsmutter des Nachstellers 51, bewirkt durch einerseits die noch von der Speicherfeder ausgeübte Restkraft und andererseits den am Kolbenstangenkopf 13 angreifenden Kräften (elastische Verformung, Rückführfeder).

Durch das mit dem Betätigungsglied 53 verbundene, große Pumpenrad 63, dessen Drehung innerhalb der als Verdrängerpumpe ausgebildeten Dämpfungseinrichtung 35 stark gehemmt ist, erfährt das Hineinschrauben der Spindel (Betätigungsglied 53) in die Kupplungsmutter der Nachstelleinrichtung 51 eine zeitlich kontrollierte Dämpfung, die sich auf auf die Phase des die Drehung beendenden Anschlags aller an der Schnellösung beteiligten Teile ausdehnt.

Der Drehwiderstand, dem das große Pumprad 63 ausgesetzt ist, ist abhängig von der Gestaltung der ineinander kämmenden Zahnung und des Innenraumes des Pumpengehäuses 61 sowie von der Menge und der Viskosität des benutzten Fluids.

Als Fluid eignen sich Schmierfette, Hydrauliköle oder Elastomere.

In der Ausführungsform nach Fig. 2 entsprechender Weise kann als Dämpfungseinrichtung auch eine andersartige, gegen eine gedrosselte Entlastung fördernde Pumpeinrichtung oder als in einer mit Fluid gefüllten Kammer schwenkbarer Flügel einer Drehkolbenanordnung ausgebildet sein. Der Drehwiderstand des Drehkolbens kann dabei durch den Spaltquerschnitt zwischen den Begrenzungsflächen des Drehkolbens und der Innenwandung des Gehäuses bzw. von dem Querschnitt von dem Flügel des Drehkolbens durchsetzenden Drosselbohrungen bestimmt werden.

**Patentansprüche**

1. Schnellösevorrichtung für Federspeicherbremszylinder (3) mit einem Federspeicherkolben (17), der über eine Kolbenstange (25) auf Bremsbetätigungsglieder wirkt, wobei im Kraftübertragungsweg zwischen dem Kolben (17) und dem Kopf (13) der Kolbenstange (25) zwei gegeneinander bewegbare, durch eine Kupplungsvorrichtung (29) zueinander arretierbare und nach Lösung der Kupplungsvorrichtung (29) während des Schnellösevorganges relativ zueinander bewegte Maschinenteile (Kolbenrohr 23 und Kolbenstange 25 bzw. Kupplungsscheiben 55, 57) angeordnet sind, und mit einer Dämpfungseinrichtung (35) für den Entspannungshub des Federspeicherkolbens (17) während des Schnellösevorganges, dadurch gekennzeichnet, daß die Dämpfungseinrichtung (35) zwischen den beiden beim Schnellösevorgang gegeneinander bewegten Maschinenteilen (Kolbenrohr 23 und Kolbenstange 25 bzw. Kupplungsscheiben 55, 57) wirksam ist.

2. Schnellösevorrichtung nach Anspruch 1, dadurch gekennzeichnet, daß die Dämpfungseinrichtung (35) in bekannter Weise in mit Fluid gefüllten Räumen gegeneinander verschiebliche, dem Kolben (17) und der Kolbenstange (25) zugeordnete Verdrängungskörper (37, 63) aufweist.

3. Schnellösevorrichtung nach Anspruch 2, für Federspeicherbremszylinder (3) mit einem am Federspeicherkolben (17) angesetzten Kolbenrohr (23) und einer im Kolbenrohr (23) geführten und mit diesem durch die Kupplungsvorrichtung (29) koppelbaren, auf einen Kolbenstangenkopf (13) wirkenden Kolbenstange (25), wobei das am Federspeicherkolben (17) angesetzte Kolbenrohr (23) in einem Querschlitz (49) vom einen Ende eines der Kupplungsvorrichtung (29) zugehörenden Koppelgliedes (29') durchgriffen ist, dadurch gekennzeichnet, daß das andere Ende des Koppelgliedes (29') in einem in einer axialen Bohrung (26) der Kolbenstange (25) axial verschieblichen und drehbaren Führungsteil (27) fest eingesetzt ist, wobei die Kolbenstange (25) vom mittleren Abschnitt des Koppel-gliedes (29') in einem L-förmigen Schlitz (Langloch 31 und Querschlitz 33) durchgriffen wird, daß der Führungsteil (27) mit einem kolbenartigen Ringteil (37) den einen der Verdrängungskörper bildet, daß der Führungsteil (27) beidseits des Ringteiles (37) von zwei den anderen Verdrängungskörper darstellenden Ringkolben (43, 45) abgedichtet umgriffen ist, von denen in Lösestellung des Federspeicherbremszylinders (3) der dem Kolbenstangenkopf (13) abgekehrte erste Ringkolben (34) nahe am Ringteil (37) liegt und der mit Abstand zum Ringteil (37) liegende, dem Kolbenstangenkopf (13) zugekehrte zweite Ringkolben (43) den mit Fluid gefüllten Raum (39) begrenzt (Fig. 1 und 3).

4. Schnellösevorrichtung nach Anspruch 3, dadurch gekennzeichnet, daß die Räume (39) zu beiden Seiten des Ringteiles (37) durch dieses überbrückende Drosselkanäle miteinander verbunden sind.

5. Schnellösevorrichtung nach Anspruch 4, dadurch gekennzeichnet, daß zwischen dem Ringteil (37) und der diesen umgebenden Innenwandung der Kolbenstange (25) ein ringförmiger Spalt (41) besteht.

6. Schnellösevorrichtung nach Anspruch 4, dadurch gekennzeichnet, daß der Ringteil (37) von mehreren umfangsmäßig verteilt angeordneten, axialverlaufenden und drosselartigen Durchgangsbohrungen durchsetzt ist.

7. Schnellösevorrichtung nach Anspruch 1, wobei der Federspeicherkolben (17) bzw. ein diesem nachgeschalteter Betriebsbremszylinder (5) mittels einer nichtselbsthemmenden Gewindepaarung (Kupplungsmutter und Gewindespindel) einer Nachstelleinrichtung (51) mit einem Betätigungsglied (53) gekoppelt ist, wobei die lösbare Kupplungsvorrichtung (29) zwischen dem Betätigungsglied (53) und dem Kolbenstangenkopf (13) angeordnet und als schaltbare Drehkupplung (Kupplungsscheiben 55 und 57 und Kupplungsband 59) ausgebildet ist, dadurch gekennzeichnet, daß die Dämpfungseinrichtung (35) als eine die Drehkupplung (Kupplungsscheiben 55 und 57 und Kupplungsband 59) überbrückende Drehdämpfungseinrichtung mit gegebenenfalls gegen eine gedrosselte Entlastung fördernder Pumpeinrichtung (Pumpenkammergehäuse 61, Pumpenzahnrad 63) oder mit in einer mit Fluid gefüllten Kammer schwenkbarem Flügel einer Drehkolbenanordnung ausgebildet ist (Fig. 2).

8. Schnellösevorrichtung nach Anspruch 7, dadurch gekennzeichnet, daß das Ende des Betätigungsgliedes (53) in bekannter Weise ein Drucklager (69) aufweist, welches in einer Ausnehmung eines mit dem undrehbaren Kolbenstangenkopf (13) verbundenen Pumpenkammergehäuses (61) einer Verdrängerpumpe eingesetzt ist, daß auf dem Betätigungsglied (53) ein großes Pumpenzahnrad (63) fest angeordnet ist, dessen Verzahnung in der Verzahnung eines in einer Ausweitung der Pumpenkammer drehbar angeordneten Zahnritzels (67) kämmt, daß die Pumpenkammer und ihre Ausweitung durch die beiden ineinanderkämmenden Zahnräder (63 und 67) in zwei Kammerabschnitte aufgeteilt ist, welche durch gedrosselte Umgehungskanäle miteinander verbunden sind, und daß sämtliche Kammern und Kanäle nach außen abgedichtet und mit Fluid gefüllt sind (Fig. 2).

9. Schnellösevorrichtung für Federspeicherbremszylinder nach den Ansprüchen 1 und 7, dadurch gekennzeichnet, daß die Dämpfungsvorrichtung (35) in einem entsprechend geformten Gehäuse einen mit Untersetzung entgegen einem auf Strömungswiderstand beruhenden Drehwiderstand drehbaren Drehkolben aufweist, wobei der Drehwiderstand des Drehkolbens von dem Spaltquerschnitt zwischen den Begrenzungsflächen des Drehkolbens und der Innenwandung des Gehäuses bzw. von dem Querschnitt von den Flügel des Drehkolbens Durchsetzenden Drosselbohrungen bestimmt ist.

## Claims

1. Quick-release device for spring-loaded brake cylinders (3) with a spring-loaded piston (17), which operates brake operating members via a piston rod (25), whereby there are arranged in the power transmission path between the piston (17) and the head (13) of the piston rod (25), two machine parts (hollow piston rod 23 and piston rod 25, or respectively two coupling discs 55, 57), which are movable in opposite directions, can be held together by a coupling device (29) and which are moved relative to each other after release of the coupling device (29) during the quick-release process, and with a damping device (35) for the pressure release stroke of the spring-loaded piston (17) during the quick-release process, characterised in that the damping device (35) is effective between the two machine parts (hollow piston rod 23 and piston rod 25, or respectively coupling plates 55, 57) which are moved in opposite directions during the quick release process.

2. Quick-release device according to claim 1, characterised in that the damping device (35) has displacement bodies (37, 63) in fluid-filled spaces, which bodies are displaceable in opposite directions and are associated with the piston (17) and the piston rod (25).

3. Quick-release device according to claim 2, for spring-loaded brake cylinders (3) with a hollow piston rod (23) attached to the spring-loaded piston (17) and a piston rod (25), which is inserted into the hollow piston rod (23) and couplable to it by the coupling device, (29) and which operates a piston rod head (13), whereby there is taken through a transverse slot (49) of the hollow piston rod (23) attached to the spring-loaded piston (17) one end of a coupling member (29') belonging to the coupling device (29), characterised in that the other end of the coupling member (29') is inserted in a fixed manner into a guide portion (27), which is axially displaceable and rotatable in an axial bore (26) of the piston rod (25), whereby the piston rod (25) is penetrated by the central section of the coupling member (29') in an L-shaped slot (longitudinal aperture 31 and transverse slot 33), in that the guide portion (27) forms, together with the piston-like annular portion (37), one of the displacement bodies, in that the guide portion (27) is embraced, in such a manner as to be sealed, on both sides of the annular portion (37) by two annular pistons (43, 45) representing the other displacement bodies, of which the first annular piston (45), which is turned away from the piston rod head (13), lies close to the annular portion (37) in the release position of the spring-loaded brake cylinder (3) and the second annular piston (43), which faces the piston rod head (13) and lies at a distance from the annular portion (37), limits the fluid-filled space (39) (Figs. 1 and 3).

4. Quick-release device according to claim 3, characterised in that the spaces (39) on both sides of the annular portion (37) are connected by throttle channels bridging the latter.

5. Quick-release device according to claim 4, characterised in that there is an annular slot (41) between the annular portion (37) and the inner wall of the piston rod (25) surrounding it.

6. Quick-release device according to claim 4, characterised in that the annular portion (37) is passed through by several throttle-like through bores distributed over the circumference and running in an axial direction.

7. Quick-release device according to claim 1, whereby the spring-loaded piston (17), respectively a service brake cylinder (5) connected subsequent to this, is coupled to an operating member (53) by means of a non-self-locking threaded coupling (coupling nut and threaded spindle) of an adjusting device (51), whereby the releasable coupling device (29) is arranged between the operating member (53) and the piston rod head (13) and is designed as a controllable rotary coupling (coupling discs 55 and 57 and coupling strip 59), characterised in that the damping device (35) is designed as a rotary damping device bridging the rotary coupling (coupling discs 55 and 57 and coupling strip 59) with a pumping device (pump chamber housing 61, pump cogwheel 63) assisting if necessary against a throttle release, or with a vane of a rotary piston arrangement tiltable in a fluid-filled chamber (Fig. 2).

8. Quick-release device according to claim 7, characterised in that the end of the operating member (53) has, as known, an abutment (69), which is inserted in a recess of a pump chamber housing (61), connected to the unrotatable piston rod head (13), of a rotary pump, in that a large pump cogwheel (63) is in fixed arrangement on the operating member (53), the teeth of which cogwheel engage with the teeth of a pinion (67) rotatably arranged in an enlargement of the pump chamber, in that the pump chamber and its extension is divided up by the two interlocking cogwheels (63 and 67) into two chamber sections, which are connected by partially throttled by-pass channels, and in that all chambers and channels are outwardly sealed and are filled with fluid (Fig. 2).

9. Quick-release device for spring-loaded brake cylinders according to claims 1 and 7, characterised in that the damping device (35) has, in an appropriately shaped housing, a rotary piston rotatable at a reduced speed against a variable resistance based on resistance to flow, whereby the variable resistance of the rotary piston is determined by the cross-section of the slot between the border surfaces of the rotary piston and the inner wall of the housing, or respectively by the cross-section of throttle bores passing through the vane of the rotary piston.

**Revendications**

1. Dispositif de desserrage rapide pour cylindre de frein à ressort accumulateur (3) à piston (17) de ressort accumulateur agissant, par l'intermédiaire d'une tige de piston (25), sur des organes d'actionnement du frein, du type dans lequel il est prévu, dans la voie de la transmission des forces, entre le piston (17) et la tête (13) de la tige de piston (25), deux éléments de machine (tube de piston 23 et tige de piston 25 ou disques d'accouplement 55, 57) qui sont mobiles l'un par rapport à l'autre, qui sont susceptibles d'être arrêtés l'un par rapport à l'autre par un dispositif d'accouplement (31) et qui, après débrayage du dispositif d'accouplement (29), sont déplacés l'un par rapport à l'autre pendant l'opération du desserrage rapide, ledit dispositif de desserrage rapide comportant un dispositif d'amortissement (35) pour la course de détente du piston (17) du ressort accumulateur, pendant l'opération de desserrage rapide, caractérisé par le fait que le dispositif d'amortissement (35) est actif entre les deux éléments de machine (tubes de piston 23 et tige de piston 25 ou disques d'accouplement 55, 57) qui sont déplacés l'un par rapport à l'autre au cours de l'operation du desserrage rapide.

2. Dispositif de desserrage rapide selon la revendication 1, caractérisé par le fait que le dispositif d'amortissement (35) comporte, de manière connue, des corps de refoulement (37, 63) associés au piston (17) et à la tige de piston (25), et déplaçables l'un par rapport à l'autre dans des chambres remplies d'un fluide.

3. Dispositif de desserrage rapide selon la revendication 2, pour cylindre de frein à ressort accumulateur (3) comportant un tube de piston (23) monté sur le piston (17) du ressort accumulateur et une tige de piston (25) guidée dans le tube de piston (23) susceptible d'être accouplée avec ce dernier par un dispositif d'accouplement (29) et agissant sur une tête de tige de piston (3), du type dans lequel le tube de piston (23) monté sur le piston (17) du ressort accumulateur, est traversé, dans une fente transversale (49), par une extrémité de l'élément d'accouplement (29') appartenant au dispositif d'accouplement (29), caractérisé par le fait que l'autre extrémité de l'élément d'accouplement (29') est encastrée dans un élément de guidage (27) tournant et mobile axialement dans un perçage axial (26) de la tige de piston (25) qui est traversée par la section médiane de l'élément d'accouplement (29'), dans une fente (L) (boutonnière 31 et fente transversale 33), que l'élément de guidage (27) forme, avec un élément annulaire (37) du genre d'un piston, l'un des corps de refoulement, que l'élément de guidage (27) est entouré de façon étanche et de part et d'autre de l'élément annulaire (37), par deux pistons annulaires (43, 45) qui représentent l'autre corps de refoulement et dont le premier piston annulaire (45) qui est éloigné de la tête (13) de la tige de piston lorsque le cylindre de frein (3) à ressort accumulateur est dans la position de desserrage, porte dans le voisinage de l'élément annulaire (37), alors que le second piston annulaire (43) qui est situé du côté de la tête (13) de la tige de piston, à une certaine distance de l'élément annulaire (35), limite la chambre (39) remplie de fluide (figures 1 et 3).

4. Dispositif de desserrage rapide selon la revendication 3, caractérisé par le fait que les chambres (39) situées de part et d'autre de l'élément annulaire (37) sont reliées entre elles par des canaux d'étranglement qui pontent ledit élément annulaire (37).

5. Dispositif de desserrage rapide selon la revendication 4, caractérisé par le fait qu'entre l'élément annulaire (37) et la paroi intérieure de la tige de piston (25) qui l'entoure, est formée une fente annulaire (41).

6. Dispositif de desserrage rapide selon la revendication 4, caractérisé par la fait que l'élément annulaire (37) est traversé par plusieurs perçages répartis périphériquement, s'étendant axialement et agissant à la manière de moyens d'étranglement.

7. Dispositif de desserrage rapide selon la revendication 1, du type dans lequel le piston (17) du ressort accumulateur ou un cylindre de frein de service (5) monté en aval de ce dernier, est relié à un élément de commande (53), par le moyen d'un dispositif à filetage non auto-bloquant (écrou d'accouplement et broche filetée) d'un dispositif de réajustage (51), et dans lequel le dispositif d'accouplement dégageable (21) est disposé entre l'élément de commande (53) et la tête (13) de la tige de piston et est réalisé sous la forme d'un accouplement de rotation dégageable (disques d'accouplement 55 et 57 et rubans d'accouplement 59), caractérisé par le fait que le dispositif d'amortissement (35) est réalisé sous la forme d'un dispositif d'amortissement tournant, qui ponte l'accouplement de rotation (disques d'accouplement 55 et 57 et rubans d'accouplement 59), avec éventuellement un dispositif de pompe à refoulement étranglé (carter de chambre de pompe 61, roue dentée de pompe 63) ou avec une ailette d'un dispositif à piston tournant et susceptible de pivoter dans une chambre remplie avec un fluide (figure 2).

8. Dispositif de desserrage rapide selon la revendication 7, caractérisé par le fait que l'extrémité de l'élément de commande (53) comporte, de manière connue, un palier de butée (39) qui est inséré dans un dégagement d'un carter de chambre de pompes (61) d'une pompe de refoulement et relié avec la tête (13) de la tige de piston, empêchée de tourner, que sur l'élément de commande (53) est fixée une grande roue dentée de pompe (63) dont les dents engrènent avec les dents d'un pignon denté (67) monté, de façon à pouvoir y tourner, dans un élargissement de la chambre de pompe, que la chambre de pompe et son élargissement est subdivisée, par les deux roues dentées (63 et 67) qui engrènent l'une dans l'autre, en deux sections de chambres qui sont reliées entre elles par des canaux de contournement étranglés, et que toutes les chambres et tous les canaux sont rendus étanches vis-à-vis de l'extérieur et sont remplis avec du fluide (figure 2).

9. Dispositif de desserrage rapide pour cylindre de frein à ressort accumulateur selon les revendications 1 et 7, caractérisé par le fait que le dispositif d'amortissement (35) comporte, dans un carter conformé de façon correspondante, un piston tournant avec démultiplication, à l'encontre d'une résistance de rotation reposant sur une résistance d'écoulement, la résistance en rotation du piston tournant étant déterminée par la section transversale de la fente entre des surfaces limites du piston tournant et la paroi intérieure du carter ou par la section transversale de perçage d'étranglement qui sont ménagées dans l'ailette du piston tournant.

**Fig.3**

**Fig.1**

**Fig.2**